(19) Europäisches Patentamt
European Patent Office
Office européen des brevets

(11) **EP 0 967 577 B1**

(12) **FASCICULE DE BREVET EUROPEEN**

(45) Date de publication et mention
de la délivrance du brevet:
**17.03.2004 Bulletin 2004/12**

(51) Int Cl.⁷: **G06T 9/00**

(21) Numéro de dépôt: **99401458.7**

(22) Date de dépôt: **14.06.1999**

(54) **Procédé et dispositif de traitement d'images, comprimées notamment selon les normes MPEG**

Verfahren und Vorrichtung zur Verarbeitung von MPEG-Bildern

MPEG frame processing method and apparatus

(84) Etats contractants désignés:
**DE FR GB IT**

(30) Priorité: **23.06.1998 FR 9807933**

(43) Date de publication de la demande:
**29.12.1999 Bulletin 1999/52**

(73) Titulaire: **STMicroelectronics S.A.**
**92120 Montrouge (FR)**

(72) Inventeur: **Bramley, Richard**
**38100 Grenoble (FR)**

(74) Mandataire: **Casalonga, Axel**
**BUREAU D.A. CASALONGA - JOSSE**
**Paul-Heyse-Strasse 33**
**80336 München (DE)**

(56) Documents cités:
**EP-A- 0 085 210          EP-A- 0 618 722**
**EP-A- 0 716 395          EP-A- 0 782 345**

- **FENG W-C ET AL: "IMPROVING DATA CACHING FOR SOFTWARE MPEG VIDEO DECOMPRESSION" PROCEEDINGS OF THE SPIE, vol. 2668, 31 janvier 1996 (1996-01-31), pages 94-104, XP000617098**

# Description

L'invention concerne le décodage d'images comprimées notamment selon une norme MPEG, leur affichage, et plus particulièrement l'échange de données entre un circuit d'affichage des images et une mémoire dynamique.

Selon diverses normes de compression d'images, notamment MPEG ("Motion Pictures Experts Group"), les images sont décodées par carrés, ou macroblocs, généralement de 16 x 16 pixels. Les macroblocs peuvent être de divers formats. Le format le plus couramment utilisé est celui dit 4 : 2 : 0 selon lequel chaque macrobloc contient quatre blocs de 8 x 8 pixels de luminance de huit bits et deux blocs de 8 x 8 pixels de chrominance de huit bits.

Les images traitées sont essentiellement de trois types, à savoir un type dit "intra", un type dit "prédit" et un type dit "bidirectionnel". L'homme du métier sait que les macroblocs d'une image "intra" ne subissent pas de compensation de mouvement. Dans une image prédite, chaque macrobloc peut subir une compensation de mouvement qui consiste à combiner le macrobloc avec un autre macrobloc, dit "prédicteur", cherché dans une image précédemment décodée. Chaque macrobloc d'une image bidirectionnelle peut subir une compensation de mouvement qui consiste à combiner le macrobloc avec deux autres macroblocs prédicteurs, cherchés respectivement dans deux images précédemment décodées. Les positions des macroblocs prédicteurs sont déterminées par des vecteurs de mouvement.

Un système de décodage/affichage MPEG, plus simplement appelé dans la suite "décodeur MPEG", doit dialoguer avec une mémoire dynamique pour procéder au décodage et à l'affichage des images décodées. Une telle mémoire joue un rôle essentiel dans le décodage et l'affichage de ces images. Or, avec les technologies actuelles de réalisation, on réalise, au sein d'une même puce, un décodeur MPEG, des moyens de traitement comportant un microprocesseur et destinés notamment à effectuer des opérations de recherche de canal lorsque l'ensemble est intégré dans un décodeur satellite par exemple, ainsi qu'un circuit de génération d'éléments graphiques devant être incrustés dans des images et correspondant par exemple à des menus interactifs appelés au moyen d'une télécommande et permettant à l'utilisateur d'effectuer des réglages de certains paramètres de fonctionnement de son téléviseur ou de son organe de réception.

Or, tous ces éléments se partagent la même mémoire dynamique. Il est donc particulièrement important de pouvoir réduire notamment la bande passante-mémoire utilisée, c'est-à-dire le nombre de cycles d'horloge pendant lequel cette mémoire est accédée par l'un des éléments pour effectuer une phase particulière de traitement, et ce afin de pouvoir laisser du temps disponible pour que les autres éléments puissent accéder à cette mémoire avant que le premier élément ne recommence une autre phase de traitement.

L'invention vise à atteindre ce but au niveau du décodeur MPEG. En d'autres termes, l'invention vise à minimiser les périodes temporelles pendant lesquelles la mémoire est accédée par le décodeur MPEG, en particulier lors de l'affichage des images décodées.

L'invention concerne un procédé comme décrit dans la revendication 1.

L'invention propose donc un procédé de traitement d'un groupe d'images incidentes codées chacune par des données comprimées, comportant un décodage par macrobloc de chaque image courante du groupe, un stockage de certaines au moins des images décodées dans une mémoire principale, et un affichage ligne par ligne en deux trames successives correspondant à des lignes de parités différentes, de l'image courante décodée. Selon une caractéristique générale de l'invention, la mémoire principale est une mémoire dynamique organisée par pages-mémoire et les macroblocs des images décodées et stockées dans ladite mémoire principale sont intégralement stockées dans des pages-mémoire. En pratique, on peut par exemple stocker deux macroblocs par page-mémoire. L'affichage de chaque trame de chaque image décodée et stockée dans la mémoire dynamique principale, comporte des accès-page à la mémoire principale, une sélection demi-macrobloc par demi-macrobloc des données de toutes les lignes formant ladite trame, un stockage séquentiel de ces données, demi-macrobloc par demi-macrobloc, dans une mémoire auxiliaire de stockage ayant une capacité de stockage au moins égale à une rangée de demi-macroblocs correspondant à un nombre prédéterminé de lignes de ladite trame, et une extraction séquentielle de ces données, ligne par ligne (c'est-à-dire par ordre de ligne) de façon à afficher ladite trame ligne par ligne.

En d'autres termes, quel que soit le type d'image stockée dans la mémoire dynamique principale et destinée à être affichée (les images "intra" ou "prédites", et éventuellement des images bidirectionnelles si celles-ci ne sont pas décodées au vol), celle-ci est accédée par des ouvertures de pages successives, macrobloc par macrobloc (c'est-à-dire par ordre de macrobloc). Les macroblocs sont successivement stockés dans la mémoire tampon interne de sortie de la mémoire dynamique. On sélectionne alors seulement les demi-macroblocs correspondant aux lignes paires ou impaires de la trame à afficher, demi-macroblocs que l'on stocke successivement dans la mémoire auxiliaire. Cette mémoire auxiliaire comporte donc, lorsqu'elle est remplie, plusieurs lignes de la trame à afficher, par exemple huit. Dans l'hypothèse où chaque ligne d'une trame comporte 45 macroblocs stockés par paires dans une page de la mémoire dynamique principale, le stockage des huit lignes de la rangée de demi-macroblocs dans la mémoire auxiliaire, et par conséquent leur affichage ultérieur aura nécessité vingt-trois ouvertures de page, c'est-à-dire huit fois moins que si l'on avait procédé à une simple extraction ligne par ligne des données de l'image directement sur la mémoire dynamique principale. En effet, dans ce cas, on aurait été contraint d'ouvrir vingt-trois pages pour l'affichage de chaque ligne.

L'homme du métier aura donc remarqué que l'invention est remarquable en ce sens qu'elle limite le nombre d'ouvertures de pages dans la mémoire dynamique principale pour l'affichage des images qui y sont stockées, ce qui diminue donc notablement le nombre de cycles nécessaires pour ces ouvertures et changements de pages, et par conséquent diminue la bande passante-mémoire utilisée.

L'invention s'applique à une variante dans laquelle on stocke dans la mémoire dynamique principale chaque type d'image, c'est-à-dire aussi bien les images "intra", "prédites" que "bidirectionnelles".

Ceci étant, l'invention trouve une application particulièrement avantageuse dans le cas où, au lieu de stocker des images bidirectionnelles dans la mémoire principale avant de les afficher, on les décode "au vol" ("on the fly"), c'est-à-dire dans le cas où on décode chaque image bidirectionnelle une première fois pendant que la première trame de l'image est directement affichée, et une deuxième fois pendant que la deuxième trame est affichée. Dans cette variante, l'affichage de chaque trame de l'image bidirectionnelle comporte également le stockage demi-macrobloc par demi-macrobloc dans ladite mémoire auxiliaire, des données correspondant à ladite trame et issues des macroblocs décodés de l'image, puis l'extraction de ces données ligne par ligne.

Cette variante de l'invention est particulièrement remarquable en ce sens qu'elle permet à la fois une diminution de la bande passante -mémoire utilisée et une réduction de la taille de celle-ci (puisque les images bidirectionnelles n'y sont pas stockées).

En outre, les même moyens sont utilisés pour effectuer la conversion bloc/ligne à la fois dans le cas de l'affichage des images "intra" ou "prédites", mais également dans le cas de l'affichage direct des images bidirectionnelles.

Puisque les images sont décodées ou extraites de la mémoire principale par blocs, mais qu'elles doivent être affichées ligne par ligne, la mémoire auxiliaire doit donc être écrite par blocs et lue par lignes et ce, simultanément de façon à ce qu'une donnée lue soit remplacée par une donnée écrite. Ainsi, selon un mode de mise en oeuvre de l'invention, l'adresse courante $A_{i,j}$ de la mémoire auxiliaire à laquelle est lue une donnée courante destinée à l'affichage avant d'être remplacée par une donnée courante d'un demi-macrobloc, (avec $0 < i < MN-1$ et $1 < j < n$), est élaborée par la loi suivante :

$$A_{i+1,j} = (A_{i,j} + x_j) \text{ modulo } (MN-1)$$

$$x_{j+1} = Nx_j \text{ modulo } (MN-1)$$

dans laquelle $x_1 = 1$, M désigne le nombre de lignes de la mémoire auxiliaire, N le nombre de données par ligne, et n le nombre total de lignes de chaque trame.

Par ailleurs, l'invention permet avantageusement d'effectuer un filtrage vertical directement sur au moins deux lignes de la portion de trame stockée dans la mémoire auxiliaire, puisque cette dernière stocke un certain nombre de lignes de chaque trame. L'invention évite donc l'utilisation de lignes à retard pour permettre un tel filtrage vertical, lignes à retard nécessaires si le filtrage est effectué directement en sortie de la mémoire principale avec les images directement lues ligne par ligne dans la mémoire principale en vue de leur affichage.

L'invention a également pour objet un dispositif de traitement d'un groupe d'images incidentes codées chacune par des données comprimées, ce dispositif comportant des moyens de décodage aptes à décoder macrobloc par macrobloc chaque image courante du groupe, une mémoire principale reliée aux moyens de décodage et apte à stocker certaines au moins des images décodées, et des moyens de gestion d'affichage aptes à afficher l'image courante décodée, ligne par ligne, et en deux trames successives correspondant à des lignes de parités différentes. Selon une caractéristique générale de l'invention, la mémoire principale est une mémoire dynamique organisée par pages-mémoire, les macroblocs des images décodées et stockées dans ladite mémoire principale étant intégralement stockés dans des pages-mémoire. Par ailleurs, les moyens de gestion d'affichage comportent

un multiplexeur possédant une première entrée reliée à la sortie des moyens de décodage, une deuxième entrée reliée à la sortie de la mémoire principale,
un convertisseur bloc/ligne dont l'entrée, reliée à la sortie du multiplexeur, est apte à recevoir, demi-macrobloc par demi-macrobloc, des données de toutes les lignes formant une trame d'une image courante à afficher et dont la sortie est reliée à un dispositif d'affichage de ladite trame.

Le convertisseur bloc/ligne comporte une mémoire auxiliaire ayant une capacité de stockage au moins égale à une rangée de demi-macroblocs correspondant à un nombre prédéterminé de lignes de la trame de l'image décodée en cours d'affichage, et des moyens de contrôle auxiliaires aptes à adresser ladite mémoire auxiliaire de façon à stocker séquentiellement les données délivrées en sortie du multiplexeur, demi-macrobloc par demi-macrobloc, et à extraire séquentiellement ces données ligne par ligne et à les délivrer à un dispositif d'affichage de façon à afficher ladite trame ligne par ligne.

Le dispositif de traitement selon l'invention comporte également des moyens de contrôle principaux aptes à commander le multiplexeur pour relier sa sortie à sa première entrée ou à sa deuxième entrée en fonction du type de l'image courante.

D'autres avantages et caractéristiques de l'invention apparaîtront à l'examen de la description détaillée de modes de mise en oeuvre et de réalisation nullement limitatifs, et des dessins annexés sur lesquels :

- la figure 1 est un synoptique très schématique d'un système de traitement d'images haute définition incorporant un dispositif de traitement d'images selon l'invention,
- la figure 2 est un synoptique schématique plus détaillé d'un dispositif de traitement selon l'invention,
- la figure 3 illustre le décodage au vol et l'affichage d'une image bidirectionnelle,
- les figures 4 et 5 illustrent plus en détail le double décodage d'une image bidirectionnelle,
- la figure 6 est un synoptique schématique plus détaillé d'un convertisseur bloc/ligne selon l'invention appartenant au dispositif de la figure 2, et
- la figure 7 illustre l'organisation par pages d'une mémoire dynamique selon l'invention,

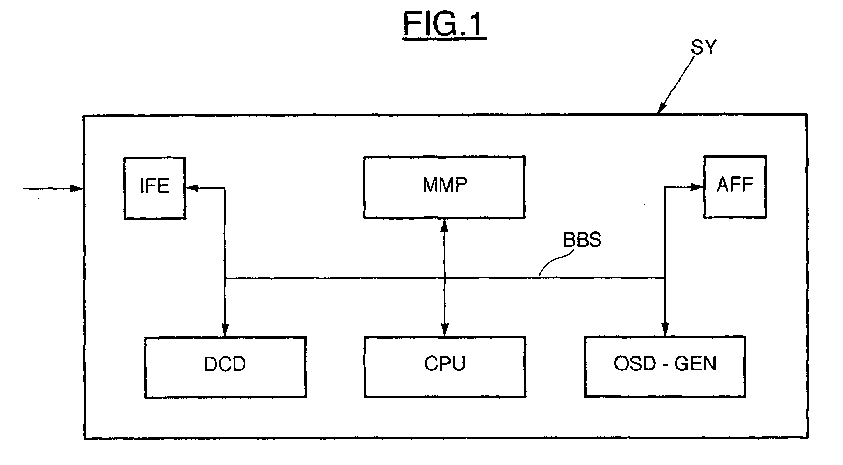

Sur la figure 1, la référence SY désigne d'une façon générale un système de traitement d'images numériques incorporant par exemple un décodeur satellite et/ou un téléviseur.

Dans ce système SY, des moyens d'entrée IFE reçoivent, par exemple, d'une antenne satellite ou d'un disque numérique (non représentés ici à des fins de simplification), un flot de données comprimées selon, par exemple, les normes MPEG.

Un dispositif DCD de traitement d'images selon l'invention, ou décodeur MPEG, décode les images codées à partir de ces données comprimées aux fins de leur affichage sur un écran d'affichage AFF.

Le système SY comprend par ailleurs un microprocesseur CPU pouvant par exemple gérer le décodage des différents canaux satellite, ainsi qu'un générateur OSD-GEN d'informations graphiques, destinées à être incrustées sur l'écran en superposition des images vidéo, par exemple des menus interactifs obtenus par l'actionnement d'une télécommande de téléviseur.

Enfin, un élément essentiel de ce système SY est une mémoire dynamique MMP qui est partagée entre ces différents éléments. Il est donc essentiel de réduire la bande passante-mémoire utilisée afin de permettre aux différents éléments du système SY d'y accéder le plus souvent possible. C'est l'un des buts de l'invention.

L'ensemble des éléments de la figure 1 dialoguent via un bus bidirectionnel BBS.

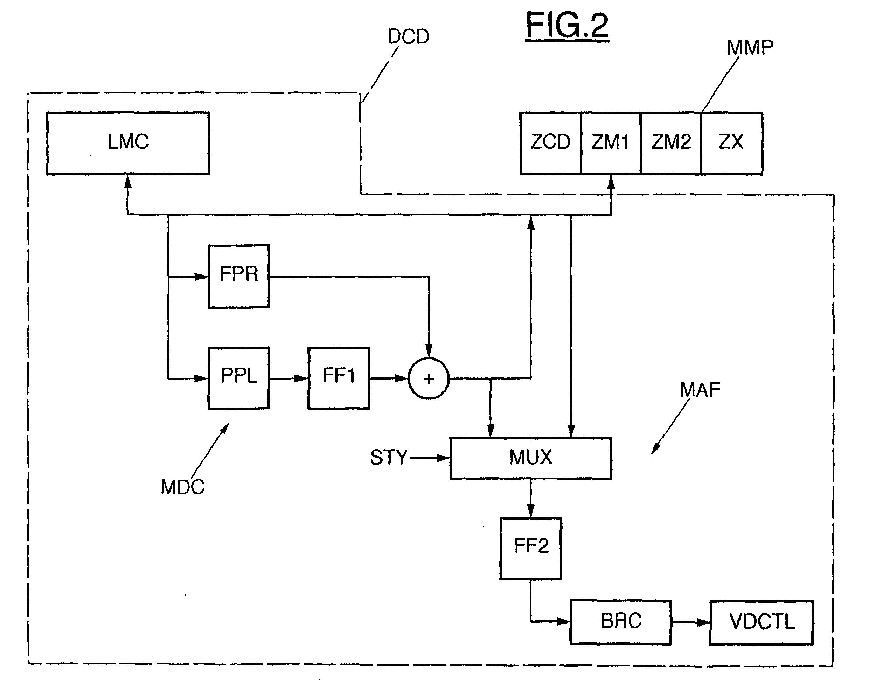

Sur la figure 2, le décodeur DCD comporte essentiellement des moyens dits "de décodage", référencés MDC, et des moyens dits "de gestion d'affichage" et référencés MAF.

Les moyens de décodage MDC comportent essentiellement un circuit dit "pipeline" PPL qui reçoit les données comprimées par un bus de 64 bits et fournit les blocs de luminance et de chrominance des macroblocs traités, à un additionneur par l'intermédiaire d'une mémoire du type "premier entré - premier sorti" (FIFO) référencée FF1. Par ailleurs, l'additionneur reçoit des blocs correspondants de macroblocs prédicteurs filtrés délivrés par un circuit de prédiction FPR à partir de macroblocs prédicteurs extraits de la mémoire MMP.

Le circuit pipeline PPL effectue de façon classique généralement un décodage à longueur variable (VLD), un décodage de chaîne de zéros (RLD), une conversion de balayage zigzag en balayage linéaire et une transformée cosinus discrète inverse (DCT$^{-1}$). Selon les normes MPEG, le circuit de prédiction FPR comprend essentiellement un filtre dit "demi-pixel" destiné, si un vecteur de mouvement permettant de chercher un macrobloc prédicteur n'est pas entier, de décaler ce macrobloc prédicteur d'un demi-pixel verticalement et/ou horizontalement. Les moyens de décodage MDC dialoguent par l'intermédiaire du bus avec la mémoire principale MMP et les échanges entre cette mémoire et les différents éléments du décodeur DCD sont gérés par des moyens de contrôle principaux LMC.

Les moyens de gestion d'affichage MAF comprennent ici un multiplexeur MUX dont une première entrée est reliée à la sortie de l'additionneur des moyens de décodage MDC, et dont une deuxième entrée est reliée à la sortie de la mémoire MMP. La sortie du multiplexeur est reliée à une deuxième mémoire tampon du type FIFO, référencé FF2. La sortie de cette mémoire tampon FF2 est reliée à un convertisseur bloc/ligne BRC dont on reviendra plus en détail ci-après sur la structure et la fonction. La sortie du bloc BRC est reliée à un contrôleur vidéo VDCTL assurant la gestion de l'écran d'affichage AFF.

La sortie du multiplexeur MUX est reliée à l'une ou l'autre de ses deux entrées en fonction d'un signal de commande STY représentatif du type d'image affichée, c'est-à-dire en l'espèce soit une image bidirectionnelle, soit une image intra ou prédite.

Les normes MPEG préconisent que la mémoire MMP comporte une zone de données comprimées ZCD d'au moins 2,6 Mégabits dans laquelle sont écrites les données comprimées en attente de traitement, ainsi qu'une zone ZX servant à stocker des informations à afficher en surimpression sur l'image et des données de son, la capacité de cette zone ZX s'étend d'environ 1 Mégabit.

Outre ces zones, la mémoire MMP comporte, dans l'exemple décrit ici et correspondant à un décodage au vol des images bidirectionnelles, deux zones supplémentaires d'images ZM1 et ZM2. Chacune de ces zones ZM1 et ZM2 doit être capable de stocker une image PAL (la plus grande selon les normes internationales) de 720 x 576 pixels. En utilisant le format 4 : 2 : 0 des macroblocs, les pixels sont les douze bits et la taille totale de l'image est d'environ 4,9 Mégabits.

Dans le mode de réalisation décrit ici, au lieu de stocker une image bidirectionnelle en cours de reconstruction dans une zone mémoire de la mémoire MMP afin de l'afficher plus tard, cette image bidirectionnelle est affichée au vol, c'est-à-dire qu'elle est affichée pendant qu'elle est décodée. Ceci permet de réduire la taille de la mémoire MMP et de ne prévoir que deux zones mémoire ZM1 et ZM2 pour stocker deux images précédemment décodées, du type "intra" ou "prédit". Dans ce cas, la taille nécessaire de la mémoire MMP est diminuée de la taille d'une zone mémoire et elle peut alors être aisément réalisée, notamment pour le standard PAL (le plus contraignant) par quatre mémoires dynamiques asynchrones (DRAM) de 256 kmots de 16 bits ou par une mémoire dynamique synchrone (SDRAM) de 16 Mégabits

Si l'on veut afficher au vol une image bidirectionnelle en cours de décodage, il faut afficher d'abord une première trame constituée des lignes impaires de l'image, puis une deuxième trame constituée des lignes paires de l'image alors que le traitement précédant l'affichage est généralement effectué sur l'image globale, c'est-à-dire dans l'ordre des lignes. Ceci entraîne, si les moyens de décodage MDC décodent les lignes au rythme d'affichage de celles-ci, que la $(2K-1)^{ème}$ ligne doit être affiché au moment où les moyens de décodage MDC décodent la $K^{ème}$ ligne. En d'autres termes, au moment où la première trame aurait dû être affichée, le décodeur n'aura pu décoder que la moitié de cette trame.

Aussi est-il prévu de décoder chaque image bidirectionnelle deux fois pendant la durée d'affichage de cette image. Dans ce cas, au moment où l'on doit afficher la $2K-1^{ème}$ ligne, on aura décodé 2K lignes. Plus précisément, au moment où on aura affiché la première trame, on aura décodé l'image complète et donc les deux trames de cette image.

Comme l'affichage s'effectue au vol, la deuxième trame qui était décodée mais non affichée est perdue. Cette deuxième trame est affichée en même temps qu'on décode une deuxième fois l'image

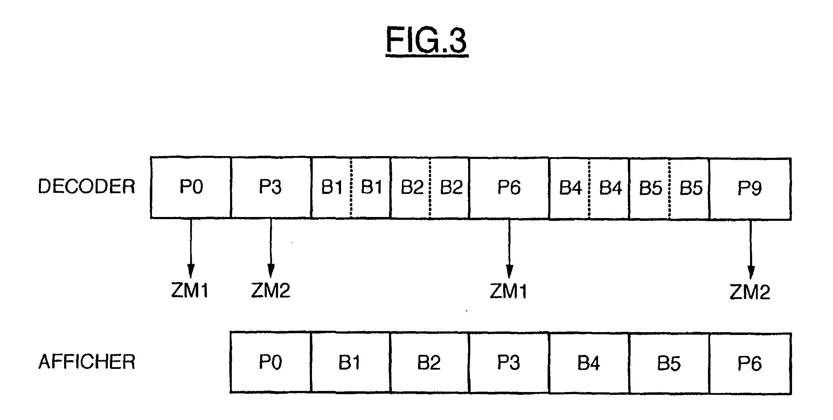

La figure 3 représente un diagramme temporel du décodage et de l'affichage d'un groupe d'images. Les images à afficher successivement sont désignées par P0, B1, B2, P3, B4, B5, P6, où la lettre P indique une image prédite et la lettre B une image bidirectionnelle. Une telle succession d'images est classique selon les normes MPEG.

La reconstruction de chaque image prédite P nécessite des macroblocs prédicteurs cherchés dans l'image prédite (ou "intra" non représentée) qui lui précède. La reconstruction de chaque image bidirectionnelle B nécessite des macroblocs prédicteurs cherchés dans les deux images prédites qui l'encadrent. Ainsi, les données comprimées correspondant aux images arrivent au décodeur DCD dans un ordre différent de celui de l'affichage. Ici, ces données comprimées arrivent selon l'ordre P0, P3, B1, B2, P6, B4, B5.

Initialement, l'image P0 est décodée et stockée en mémoire, par exemple dans la zone ZM1. Pendant que l'image P3 est décodée et stockée dans la zone ZM2, on affiche l'image P0. Ensuite, l'image P1 est décodée une première fois à vitesse double tandis que l'on affiche au vol la première trame de l'image B1, puis on décode une deuxième fois l'image B1 à vitesse double tandis qu'on affiche la deuxième trame de l'image B1. Chaque décodage de l'image B1 par les moyens MDC utilise des macroblocs prédicteurs cherchés dans les images P0 et P3, qui sont stockées dans les zones ZM1 et ZM2. Les mêmes opérations se produisent pour l'image bidirectionnelle B2. Ensuite, l'image P6 est décodée et stockée dans la zone ZM1 à la place de l'image P0 tandis qu'on affiche l'image P3. Les images B4 et B5 sont, comme les images B1 et B2, décodées deux fois à vitesse double tandis qu'on les affiche. Les décodages des images B4 et B5 utilisent des macroblocs prédicteurs pour chercher dans les images P3 et P6 qui sont stockées dans les zones ZM2 et ZM1.

Afin d'effectuer le décodage au vol des images bidirectionnelles, les moyens de contrôle LMC sont reprogrammés pour effectuer deux fois la tache de transfert au circuit pipeline PPL des données comprimées correspondant à chaque image bidirectionnelle et stockées dans la zone ZCD. A cet égard, les moyens de contrôle sont typiquement cadencés à 25,5 MHz, le circuit pipeline étant lui cadencé typiquement à 34 MHz. Des circuits fonctionnant à ces vitesses sont tout à fait réalisables dans la technologie habituelle.

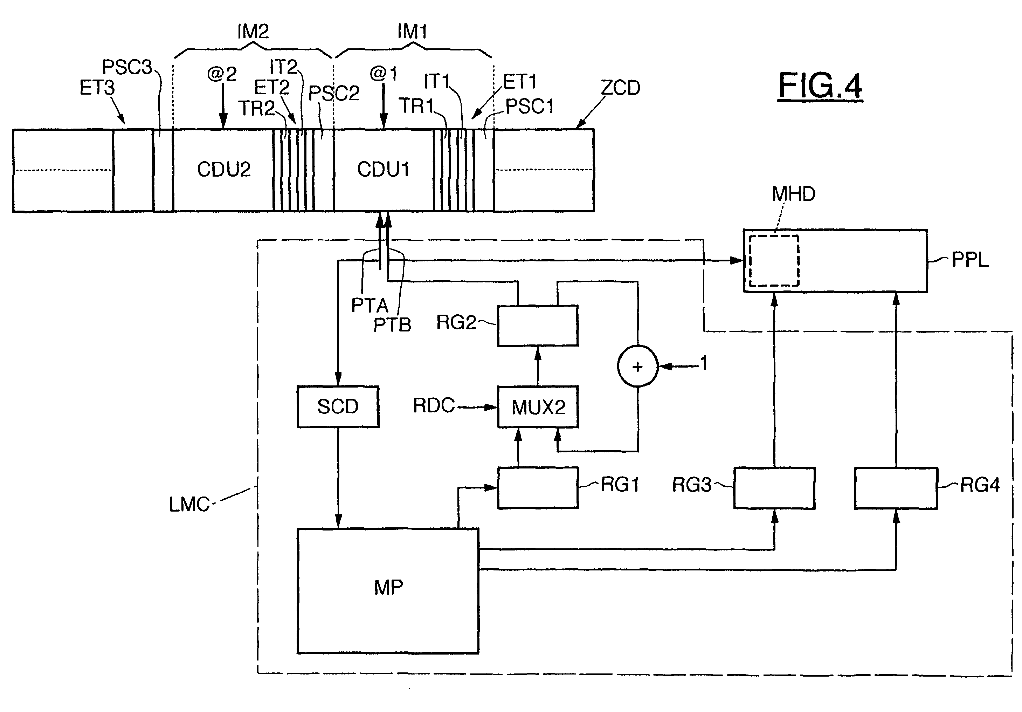

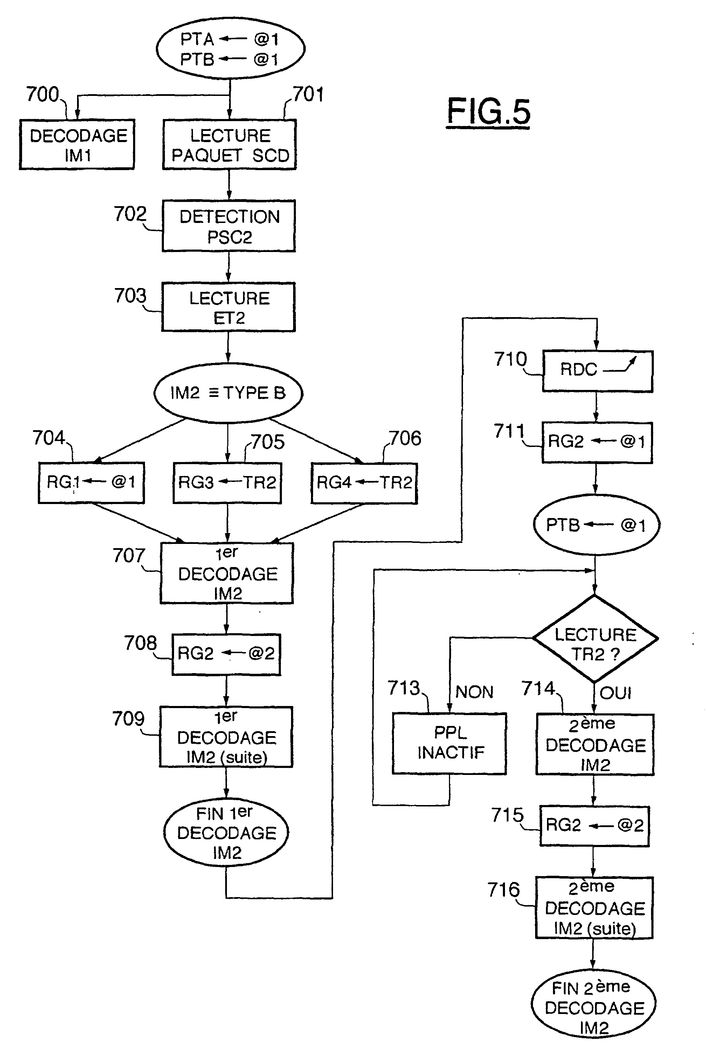

Un mode particulièrement simple de réalisation et de mise en oeuvre permettant aux moyens de contrôle LMC de délivrer deux fois les données comprimées au circuit pipeliné PPL est maintenant décrit en se référant plus particulièrement aux figures 4 et 5.

Classiquement, le flot des données comprimées MPEG, stockées dans la zone mémoire ZCD, comporte des groupes successifs de données comprimées respectivement relatifs à des images incidentes successives IM1, IM2...

Chaque groupe de données associé à une image comporte un identifiant de début d'image PSC (Code de Début d'Image; "Picture Start Code") suivi d'un en-tête ET. Cet en-tête comporte notamment un identifiant spécifique de ladite image, permettant d'identifier de façon bi-univoque ladite image dans la séquence d'images. Cet identifiant spécifique est par exemple ici la référence temporelle TR de l'image ("Temporal Reference" en langue anglaise). L'en-tête comporte également une information IT identifiant le type d'image, par exemple "intra", "prédit" ou "bidirectionnel".

L'en-tête est suivi des données utiles CDU de l'image.

Il est prévu un premier pointeur d'adresse PTA et un deuxième pointeur d'adresse PTB permettant chacun de lire par paquets de bits la zone mémoire aux adresses successives @1, @2...

Les moyens LMC, architecturés autour de moyens de traitement MP, composés essentiellement d'un microprocesseur, comportent un détecteur SCD d'identifiant de début d'image, réalisé par exemple de façon câblé, et apte à détecter dans chaque paquet de bits extrait à l'adresse pointée par le premier pointeur d'adresse PTA, la présence ou l'absence d'un identifiant de début d'image PSC.

Des moyens de gestion de pointeur, aptes à commander la position du deuxième pointeur PTB, sont également reliés aux moyens de traitement MP. Ces moyens de gestion de pointeur comportent schématiquement par exemple un premier registre RG1 dont la sortie est reliée à l'entrée d'un deuxième registre RG2 par l'intermédiaire d'un multiplexeur MUX2 commandé par un signal de commande RDC représentatif de la commande d'un deuxième décodage d'une image. La sortie du registre RG2 est également rebouclée sur son entrée par l'intermédiaire d'un moyen d'incrémentation d'adresse et du multiplexeur MUX2. Le registre RG2 contient donc en fait l'adresse courante du pointeur d'adresse PTB.

Un troisième registre RG3 est apte à stocker la référence temporelle TR d'une image tandis qu'un quatrième registre RG4 est apte à stocker l'information IT représentative du type d'image à décoder de façon à permettre aux différents moyens du circuit pipeline PPL de décoder de façon adéquate l'image courante.

En fait, chaque registre RG3 et RG4 est apte à stocker régulièrement les informations TR et IT de l'image courante en cours de décodage dans le circuit PPL et également celles de l'image suivante.

Enfin, des moyens d'inhibition de décodage MHD, qui ont été représentés ici à des fins de simplification à l'intérieur du bloc PPL, mais qui pourraient bien entendu se situer à l'extérieur, reçoivent d'une part les bits extraits de la mémoire et contenus dans le paquet pointé par le pointeur PTB, et d'autre part, le contenu du registre RG3. On reviendra plus en détail ci-après sur la fonction de ces moyens MHD qui peuvent être réalisés de façon câblée ou par logiciel.

On va maintenant décrite en se référant plus particulièrement à la figure 5, le fonctionnement de moyens qui viennent d'être décrits en référence à la figure 4.

On suppose que le décodage de l'image IM1 est en cours dans le circuit pipeline PPL (étape 700) et que les deux pointeurs d'adresse PTA et PTB pointent à l'adresse @1.

Le paquet de bits situé à l'adresse @1, extrait de la zone mémoire ZCD, est lu par le détecteur SCD (étape 701).

Celui-ci détecte alors la pésence de l'identifiant de début d'image PSC2 de l'image IM2 (étape 702). Un signal représentatif de cette détection est alors envoyé au microprocesseur MP qui lit la suite des bits du paquet et notamment l'identifiant spécifique ET2 de l'image ainsi que le type IT2 de celle-ci (étape 703). L'image IM2 étant du type bidirectionnel, nécessistant donc un redécodage, le microprocesseur MP stocke dans le registre RG1 (étape 704) l'adresse @1 du paquet contenant l'identifiant PSC2 de début d'image de l'image IM2. Par ailleurs, la référence temporelle TR2 de l'image IM2 est stockée dans le registre REG3 (étape 705) et le type IT2 de cette image est stockée dans le registre REG4 (étape 706).

Le premier décodage de l'image IM2 débute alors dans le circuit pipeline PPL à l'aide des données utiles CDU2 issues du même paquet puisque le deuxième pointeur d'adresse PTB est également à l'adresse @1.

Le registre RG2 est ensuite incrémenté de façon à contenir l'adresse @2, ce qui a pour conséquence de faire pointer le pointeur d'adresse PTB sur cette nouvelle adresse @2 (étape 708). Le pointeur d'adresse PTA est également incrémenté par ailleurs et pointe également sur l'adresse @2.

Le premier décodage de l'image bidirectionnelle IM2 se poursuit avec le reste des données CDU2 (étape 709).

A la fin de ce premier décodage, le circuit VLD contenu dans les moyens PPL délivre un signal de fin de décodage ce qui a pour effet, sous l'action du signal de commande RDC émis par le microprocesseur MP (étape 710), de positionner le multiplexeur MUX2 sur sa première entrée forçant alors le contenu du registre RG2 à l'adresse @1 (étape 711).

En conséquence, le deuxième pointeur d'adresse PTB revient en arrière de façon à repointer sur l'adresse @1. Une difficulté réside ici dans le fait que dans un flot de données MPEG, les intervalles entre les différents identifiants de début d'image PSC des différentes images ne sont pas constants et dépendent du contenu des images. Par conséquent, cette difficulté, en combinaison avec la lecture par paquets de la zone mémoire ZCD, ne permet pas de connaître avec précision l'endroit où se situe le début de l'image IM2 dans le paquet.

L'invention résoud cette difficulté en utilisant, en combinaison avec le retour en arrière du pointeur PTB à l'adresse du paquet contenant l'identifiant de début d'image PSC2 de l'image à redécoder, la référence temporelle TR2 de l'image à redécoder.

Plus précisément, les moyens d'inhibition de décodage MHD vont alors tester séquentiellement les différents bits du paquet lus à l'adresse @ 1 et comparer ces informations avec l'identifiant spécifique (référence temporelle) TR2 de l'image IM2, stockée dans le registre RG3.

Et, tant que cette comparaison n'est pas positive, c'est-à-dire tant que l'on n'a pas à nouveau détecté la présence de cette référence temporelle TR2, les données fournies par le paquet ne sont pas prises en compte par le circuit pipeline PPL ce qui rend en fait ce dernier inactif (étape 713).

C'est seulement lorsque le résultat de comparaison est positif, c'est-à-dire lorsqu'on a à nouveau détecté la présence de la référence temporelle TR2 que les moyens MHD autorisent la prise en compte par le circuit PPL des données comprimées, permettant le deuxième décodage de l'image bidirectionnelle (étape 714). Au cours de ce deuxième décodage, le registre RG2 est à nouveau incrémenté de façon à déplacer le pointeur PTB à l'adresse @2 (étape 715) de façon à poursuivre le deuxième décodage de l'image IM2 (étape 716) jusqu'à sa fin.

Si l'on revient maintenant au fonctionnement général du décodeur DCD, les images "intra" et "prédites" sont, par un mécanisme classique de requêtes, envoyées vers la mémoire MMP à la sortie de l'additionneur tandis que chaque image bidirectionnelle B décodée est transmise macrobloc par macrobloc vers la mémoire tampon FF2 par l'intermédiaire du multiplexeur commandé par le signal STY émis par les moyens de contrôle LMC. Lorsqu'une image "intra" ou "prédite" stockée dans la mémoire MMP doit être affichée, le multiplexeur MUX est alors commandé sur sa deuxième entrée par le signal STY de façon à stocker les macroblocs de l'image, successivement extraits de la mémoire MMP, dans la mémoire tampon FF2.

Les images délivrées en sortie du multiplexeur MUX sont stockées séquentiellement dans la mémoire tampon FF2, macrobloc par macrobloc. Par contre, le contrôleur vidéo VDCTL nécessite une réception des pixels de l'image ligne par ligne. C'est la raison pour laquelle un convertisseur bloc/ligne BRC est intercalé entre la mémoire tampon FF2 et le contrôleur vidéo VDCTL.

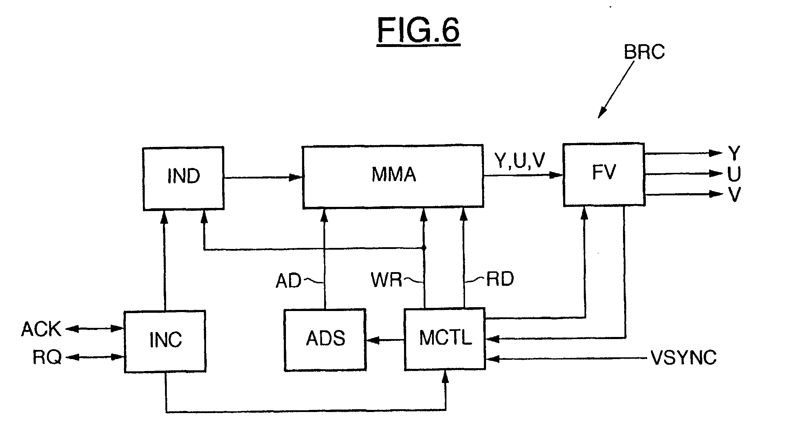

Comme illustré plus précisément sur la figure 6, ce convertisseur BRC comporte une interface d'entrée INB recevant les différents blocs de luminance et de chrominance de chaque macrobloc stocké dans la mémoire tampon FF2. Ces moyens INB sont contrôlés par un contrôleur d'entrée INC au moyen de signaux de requête RQ et d'acquittement ACK. Les données sont ensuite successivement écrites dans une mémoire auxiliaire MMA dont les adresses $A_{i,j}$ sont successivement déterminées par un séquenceur d'adresses ADS. Les différentes valeurs de luminance Y et de chrominance U et V sont extraites ligne par ligne de la mémoire MMA et délivrées à un circuit de filtrage FV qui, lorsqu'il est activé, permet d'effectuer un filtrage vertical sur ces lignes, c'est-à-dire par exemple une moyenne pondérée entre les différentes valeurs des pixels de ces lignes de façon à délivrer des valeurs filtrées de luminance et de chrominance. Le convertisseur BRC est contrôlé d'une façon générale par un contrôleur général MCTL recevant notamment un signal de synchronisation de trame VSYNC fourni par le contrôleur vidéo VDCTL. Ce signal VSYNC permet d'effectuer une sélection de parité. En effet, à chaque décodage, on n'affiche qu'une trame c'est-à-dire seulement les lignes paires ou seulement les lignes impaires. Ainsi, le convertisseur BRC trie parmi les lignes des blocs qu'il reçoit de la mémoire tampon FF2 celles dont la parité correspondant à celle de la trame à afficher. C'est la raison pour laquelle on parle d'un stockage dans la mémoire auxiliaire MMA, demi-macrobloc par demi-macrobloc (chaque demi-macrobloc correspondant à huit lignes). Ainsi, la capacité de ce convertisseur BRC est de huit lignes bien que les macroblocs correspondent à seize lignes. En d'autres termes, la mémoire MMA est capable de stocker au moins une rangée de demi-macroblocs (par exemple une rangée de 45 demi-macroblocs) correspondant à un nombre prédéterminé de lignes de la trame à afficher (en l'espèce huit).

La mémoire MMA est une mémoire dynamique que l'on peut considérer comme une FIFO de grande taille, à l'exception du fait que les accès ne sont pas consécutifs puisque cette mémoire est lue par lignes et écrite par blocs (demi-macroblocs). En fait, les moyens de contrôle MCTL et le séquenceur d'adresses sont programmés de façon à permettre l'écriture séquentielle des données d'un demi-macrobloc dès qu'une place suffisante dans la mémoire a été libérée par le processus d'affichage.

Plus précisément, le séquenceur d'adresses élabore l'adresse courante $A_{i,j}$ de la mémoire auxiliaire à laquelle est lue une donnée courante destinée à l'affichage avant d'être remplacée par une donnée courante d'un demi-macrobloc par la loi suivante :

$$A_{i+1,j} = (A_{i,j} + x_j) \text{ modulo } (MN-1)$$

$$x_{j+1} = N.x_j \text{ modulo } (MN-1).$$

Dans cette loi, $x_1=1$, M désigne le nombre de lignes de la mémoire auxiliaire, N le nombre de données par ligne, et n le nombre total de lignes de chaque trame. Par ailleurs, $0 < i < MN-1$ et $1 < j < n$.

Le fait d'utiliser cette mémoire auxiliaire du convertisseur BRC permet de limiter le nombre d'ouvertures de pages pour l'affichage des images "intra" et "prédites" stockées dans la mémoire principale MMP.

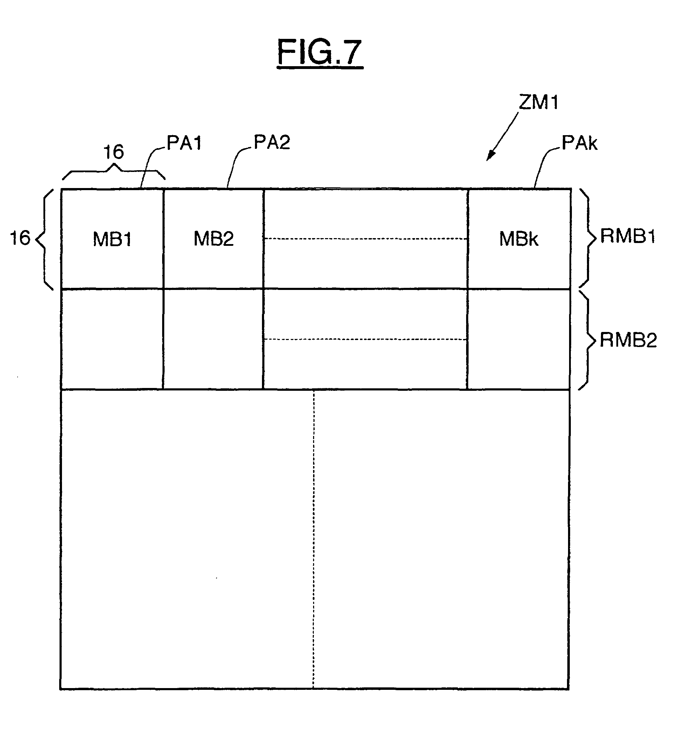

En effet, si l'on considère que la mémoire MMP est organisée en pages-mémoire (figure 7), chaque macrobloc MB de l'image stockée dans la zone ZM1 par exemple, est intégralement stocké dans une page PA de la zone de mémoire ZM1. A des fins de simplification, on n'a représenté qu'un seul macrobloc par page sur la figure 7, étant entendu qu'en pratique, chaque page-mémoire contient deux macroblocs. Sur la figure 7, la première rangée RMB1 de macrobloc MB1 - MBk correspondant aux seize premières lignes de l'image stockée dans la zone ZM1 s'étend donc sur les pages-mémoire PA1 - PAk. Le stockage dans la mémoire auxiliaire MMA de la rangée de demi-macroblocs correspondant aux huit lignes de mêmes parités nécessite donc k ouvertures de pages. L'affichage ensuite, ligne par ligne, des huit lignes stockées dans la mémoire MMA, ne nécessite donc plus d'ouverture de page. Le nombre total de cycles nécessaires de changement de page pour l'affichage complet de chaque trame d'une image stockée dans la mémoire MMP est donc particulièrement réduit par rapport à un cas de figure où l'on extrait les pixels de chaque trame ligne par ligne directement à partir de la mémoire MMP. En effet, dans un tel cas de figure, il faudrait effectuer k ouvertures de page par ligne de trame.

L'homme du métier aura donc remarqué que l'invention permet une réduction notable de la bande passante-mémoire utilisée. En outre, on utilise le même bloc de conversion BRC et, par conséquent, la même mémoire auxiliaire MMA pour afficher les images "intra" et "prédites" stockées dans la mémoire MMP, et pour afficher directement les images bidirectionnelles décodées au vol.

Enfin, puisque la mémoire auxiliaire MMA contient un nombre prédéterminé de lignes, en l'espèce huit, il est possible de connecter directement les moyens de filtrage FV en sortie de la mémoire MMA et d'effectuer ainsi sur commande un filtrage vertical d'au moins deux lignes contenues dans la mémoire MMA sans utiliser pour cela de lignes à retard (comme cela aura été le cas si l'on avait extrait directement de la mémoire MMP ligne par ligne les données de la trame).

L'invention n'est pas limitée aux modes de réalisation et de mise en oeuvre qui viennent d'être décrits. Ainsi, l'affichage, par l'intermédiaire du bloc BRC, des images stockées dans la mémoire MMP est également avantageux au niveau de la bande passante-mémoire, dans une variante de mise en oeuvre ne prévoyant pas un décodage au vol des images bidirectionnelles mais leur stockage temporaire dans une autre zone de la mémoire MMP, au même titre que les images "intra" ou "prédites".

**Revendications**

1. Procédé de traitement d'un groupe d'images incidentes codées chacune par des données comprimées, comportant un décodage par macrobloc de chaque image courante du groupe, un stockage de certaines au moins des images décodées dans une mémoire principale (MMP), et un affichage ligne par ligne et en deux trames successives correspondant à des lignes de parités différentes, de l'image courante décodée, **caractérisé par le fait que**, la mémoire principale (MMP) étant une mémoire dynamique organisée par pages-mémoire, les macroblocs (MB) des images décodées et stockées dans ladite mémoire principale sont intégralement stockés dans des pages-mémoire, et l'affichage de chaque trame de chaque image décodée stockée dans la mémoire dynamique principale comporte des accès-page à la mémoire principale permettant d'accéder à l'image macrobloc par macrobloc lors des ouvertures de pages successives, une sélection demi-macrobloc par demi-macrobloc des données de toutes les lignes formant ladite trame, un stockage séquentiel de ces données, demi-macrobloc par demi-macrobloc, dans une mémoire auxiliaire de stockage (MMA) ayant une capacité de stockage au moins égale à une rangée de demi-macroblocs correspondant à un nombre prédéterminé de lignes de ladite trame, et une extraction séquentielle de ces données, ligne par ligne, de façon à afficher ladite trame ligne par ligne.

2. Procédé selon la revendication 1, dans lequel le groupe d'images comporte des images de type bidirectionnel ainsi que d'autres types d'images, chaque image de type bidirectionnel nécessitant des données de deux images précédemment décodées d'un autre type pour être elles-même décodées, **caractérisé par le fait qu'**on stocke chaque type d'image dans la mémoire dynamique principale (MMP).

3. Procédé selon la revendication 1, dans lequel le groupe d'images comporte des images de type bidirectionnel ainsi que d'autres types d'images, chaque image de type bidirectionnel nécessitant des données de deux images précédemment décodées d'un autre type pour être elles-même décodées, **caractérisé par le fait qu'**on ne stocke dans la mémoire dynamique principale (MMP) que les types d'images non bidirectionnels, **par le fait qu'**on décode chaque image bidirectionnelle (B) une première fois pendant que la première trame de l'image est directement affichée, et une deuxième fois pendant que la deuxième trame est affichée, et **par le fait que** l'affichage de chaque trame de l'image bidirectionnelle comporte le stockage demi-macrobloc par demi-macrobloc dans ladite mémoire auxiliaire, des données correspondant à ladite trame et issues des macroblocs décodés de l'image, puis l'extraction de ces données ligne par ligne.

4. Procédé selon l'une des revendications précédentes, **caractérisé par le fait que** l'adresse courante $A_{i,j}$ de la mémoire auxiliaire à laquelle est lue une donnée courante destinée à l'affichage avant d'être remplacée par une donnée courante d'un demi-macrobloc, avec $0 < i < MN-1$ et $1 < j < n$, est élaborée par la loi suivante

$$A_{i+1,j} = ( A_{i,j} + x_j ) \text{ modulo } (MN-1)$$

$$x_{j+1} = N.x_j \text{ modulo } (MN-1)$$

dans laquelle $x_1 = 1$, M désigne le nombre de lignes de la mémoire auxiliaire (MMA), N le nombre de données par lignes, et n le nombre total de lignes de chaque trame.

**5.** Procédé selon l'une des revendications précédentes, **caractérisé par le fait qu'**on effectue un filtrage vertical (FV) directement sur au moins deux lignes de la portion de trame stockée dans ladite mémoire auxiliaire.

**6.** Dispositif de traitement d'un groupe d'images incidentes codées chacune par des données comprimées, comportant des moyens de décodage (MDC) aptes à décoder macrobloc par macrobloc chaque image courante du groupe, une mémoire principale (MMP) reliée aux moyens de décodage et apte à stocker certaines au moins des images décodées, et des moyens d'affichage (MAF) aptes à afficher l'image courante décodée, ligne par ligne et en deux trames successives correspondant à des lignes de parités différentes, **caractérisé par le fait que** la mémoire principale (MMP) est une mémoire dynamique organisée par pages-mémoire, les macroblocs des images décodées et stockées dans ladite mémoire principale étant intégralement stockés dans des pages-mémoire et accessibles macrobloc par macrobloc par des ouvertures de pages successives, **par le fait que** les moyens de gestion d'affichage (MAF) comportent

un multiplexeur (MUX) possédant une première entrée reliée à la sortie des moyens de décodage, une deuxième entrée reliée à la sortie de la mémoire principale,

un convertisseur bloc/ligne (BRC) dont l'entrée, reliée à la sortie du multiplexeur (MUX), est apte à recevoir, demi-macrobloc par demi-macrobloc, des données de toutes les lignes formant une trame d'une image courante à afficher et dont la sortie est relié à un dispositif d'affichage (VDCTL) de ladite trame, le convertisseur bloc/ligne comportant une mémoire auxiliaire (MMA) ayant une capacité de stockage au moins égale à une rangée de demi-macroblocs correspondant à un nombre prédéterminé de lignes de la trame de l'image décodée en cours d'affichage, et un contrôleur auxiliaire de mémoire (MCTL, ADS) apte à adresser ladite mémoire auxiliaire de façon à stocker séquentiellement les données délivrées en sortie du multiplexeur, demi-macrobloc par demi-macrobloc, et à extraire séquentiellement ces données, ligne par ligne, et à les délivrer au dispositif d'affichage de façon à afficher ladite trame ligne par ligne,

et des moyens de contrôle (LMC) aptes à commander le multiplexeur pour relier sa sortie à sa première entrée ou à sa deuxième entrée en fonction du type de l'image.

**7.** Dispositif selon la revendication 6, **caractérisé par le fait que** le contrôleur auxiliaire de mémoire (ADS) élabore l'adresse courante $A_{i,j}$ de la mémoire auxiliaire à laquelle est lue une donnée courante destinée à l'affichage avant d'être remplacée par une donnée courante d'un demi-macrobloc, avec $0<i<MN-1$ et $1<j<n$, par la loi suivante

$$A_{i+1,j} = ( A_{i,j} + x_j ) \text{ modulo } (MN-1)$$

$$x_{j+1} = N.x_j \text{ modulo } (MN-1)$$

dans laquelle $x_1=1$ , M désigne le nombre de lignes de la mémoire auxiliaire, N le nombre de données par lignes, et n le nombre total de lignes de chaque trame.

**8.** Dispositif selon la revendication 6 ou 7, **caractérisé par le fait que** les moyens d'affichage (MAF) comportent des moyens de filtrage vertical (FV), directement connectés à la sortie de la mémoire auxiliaire, et aptes à effectuer un filtrage vertical sur au moins deux lignes de la portion de trame stockée dans ladite mémoire auxiliaire.

**Claims**

**1.** Method of processing a group of inbound images each coded by compressed data, comprising a macroblockwise decoding of each current image of the group, storage of some at least of the decoded images in a main memory (MMP), and line-by-line display as two successive frames corresponding to -lines of unlike parities, of the decoded current image, **characterized in that**, the main memory (MMP) being a dynamic memory organized into memory pages, the macroblocks (MB) of the decoded images stored in the said main memory are wholly stored in memory pages, and the displaying of each frame of each decoded image stored in the main dynamic memory comprises page accesses to the main memory enabling the image to be accessed, macroblock by macroblock, during openings of successive pages, selection, half-macroblock by half-macroblock, of the data of all the lines forming the said frame, sequential storage of these data, half-macroblock by half-macroblock, in an auxiliary storage memory (MMA) having a storage capacity at least equal to a row of half-macroblocks corresponding to a predetermined number of lines of the said frame, and sequential extraction of these data, line by line, so as to display the said frame line by line.

**2.** Method according to Claim 1, in which the group of images comprises images of bidirectional type as well as other types of images, each image of bidirectional type requiring data from two previously decoded images of another type so as to be decoded themselves, **characterized in that** each type of image is stored in the main dynamic memory (MMP).

3. Method according to Claim 1, in which the group of images comprises images of bidirectional type as well as other types of images, each image of bidirectional type requiring data from two previously decoded images of another type so as to be decoded themselves, **characterized in that** only the non-bidirectional types of images are stored in the main dynamic memory (MMP), **in that** each bidirectional image (B) is decoded a first time while the first frame of the image is displayed directly, and a second time while the second frame is displayed, and **in that** the displaying of each frame of the bidirectional image comprises the storage, half-macroblock by half-macroblock in the said auxiliary memory, of the data corresponding to the said frame and emanating from the decoded macroblocks of the image, followed by the extracting of these data line by line.

4. Method according to one of the preceding claims, **characterized in that** the current address $A_{i,j}$ of the auxiliary memory at which is read a current datum intended for display before being replaced by a current datum of a half-macroblock, with $0<i<MN-1$ and $1<j<n$, is calculated through the following law

$$A_{i+1,j} = (A_{i,j} + x_j) \text{ modulo } (MN-1)$$

$$x_{j+1} = N.x_j \text{ modulo } (MN-1)$$

in which $x_1=1$, M denotes the number of lines of the auxiliary memory (MMA), N the number of data per line, and n the total number of lines of each frame.

5. Method according to one of the preceding claims, **characterized in that** a vertical filtering (FV) is performed directly on at least two lines of the portion of frame stored in the said auxiliary memory.

6. Device for processing a group of inbound images each coded by compressed data, comprising decoding means (MDC) able to decode, macroblock by macroblock, each current image of the group, a main memory (MMP) linked to the decoding means and able to store some at least of the decoded images, and display means (MAF) able to display the current decoded image, line by line and as two successive frames corresponding to lines of unlike parities, **characterized in that** the main memory (MMP) is a dynamic memory organized into memory pages, the macroblocks of the decoded images stored in the said memory being wholly stored in memory pages and accessible, macroblock by macroblock, by openings of successive pages, **in**

**that** the display management means (MAF) comprise

a multiplexer (MUX) possessing a first input linked to the output of the decoding means, a second input linked to the output of the main memory,

a block/line converter (BRC) whose input, linked to the output of the multiplexer (MUX) is able to receive, half-macroblock by half-macroblock, data of all the lines forming a frame of a current image to be displayed and whose output is linked to a display device (VDCTL) for displaying the said frame, the block/line converter comprising an auxiliary memory (MMA) having a storage capacity at least equal to a row of half-macroblocks corresponding to a predetermined number of lines of the frame of the decoded image being displayed, and a memory auxiliary controller (MCTL, ADS) able to address the said auxiliary memory so as sequentially to store the data output by the multiplexer, half-macro by half-macroblock, and sequentially to extract these data, line by line, and to deliver them to the display device so as to display the said frame line by line,

and control means (LMC) able to control the multiplexer so as to link its output to its first input or to its second input as a function of the type of the image.

7. Device according to Claim 6, **characterized in that** the memory auxiliary controller (ADS) calculates the current address $A_{i,j}$ of the auxiliary memory at which is read a current datum intended for display before being replaced by a current datum of a half-macroblock, with $0<i<MN-1$ and $1<j<n$, through the following law

$$A_{i+1,j} = (A_{i,j} + x_j) \text{ modulo } (MN-1)$$

$$x_{j+1} = N.x_j \text{ modulo } (MN-1)$$

in which $x_1=1$, M denotes the number of lines of the auxiliary memory (MMA), N the number of data per line, and n the total number of lines of each frame.

8. Device according to Claim 6 or 7, **characterized in that** the display means (MAF) comprise means of vertical filtering (FV), which are connected directly to the output of the auxiliary memory, and are able to perform a vertical filtering on at least two lines of the portion of frame stored in the said auxiliary memory.

**Patentansprüche**

1. Verfahren zur Verarbeitung einer anfallenden Gruppe von Bildern, die jeweils durch komprimierte Daten codiert sind, mit einer Makroblockdecodierung jedes aktuellen Bildes der Gruppe, einer Speicherung von mindestens gewissen der decodierten Bilder in einem Hauptspeicher (MMP), und einer zeilenweisen Anzeige in zwei aufeinanderfolgenden Rastern entsprechend Zeilen mit unterschiedlichen Paritäten, des aktuellen decodierten Bildes, **dadurch gekennzeichnet, daß** der Hauptspeicher (MMP) ein dynamischer Speicher ist, der in Speicherseiten organisiert ist, die Makroblöcke (MB) der decodierten und im Hauptspeicher gespeicherten Bilder vollständig in den Speicherseiten gespeichert werden, und die Anzeige jedes Rasters jedes im dynamischen Hauptspeicher gespeicherten decodierten Bildes Seitenzugriffe auf den Hauptspeicher umfaßt, die den makroblockweisen Zugriff auf das Bild bei Öffnungen von aufeinanderfolgenden Seiten, eine halbmakroblockweise Auswahl der Daten von allen Zeilen, die das Raster bilden, eine sequentielle halbmakroblockweise Speicherung dieser Daten in einem Hilfsspeicher (MMA) mit einer Speicherkapazität mindestens gleich einer Reihe von Halbmakroblöcken entsprechend einer vorbestimmten Anzahl von Zeilen des Rasters und eine sequentielle zeilenweise Entnahme dieser Daten zur zeilenweisen Anzeige des Rasters erlauben.

2. Verfahren nach Anspruch 1, bei dem die Gruppe von Bildern Bilder bidirektionaler Art sowie andersartige Bilder umfaßt, wobei jedes Bild der bidirektionalen Art Daten von zwei vorher decodierten Bildern einer anderen Art erfordert, um selbst decodiert zu werden, **dadurch gekennzeichnet, daß** jede Bildart im dynamischen Hauptspeicher (MMP) gespeichert wird.

3. Verfahren nach Anspruch 1, wobei die Gruppe von Bildern Bilder der bidirektionalen Art sowie andersartige Bilder umfaßt, wobei jedes Bild der bidirektionalen Art Daten von zwei vorher decodierten Bildern einer anderen Art erfordert, um selbst decodiert zu werden, **dadurch gekennzeichnet, daß** im dynamischen Hauptspeicher (MMP) nur die nichtbidirektionalen Bilder gespeichert werden, indem jedes bidirektionale Bild (B) ein erstes Mal decodiert wird, während der erste Raster des Bildes direkt angezeigt wird, und ein zweites Mal, während der zweite Raster angezeigt wird, und daß die Anzeige jedes bidirektionalen Bildrasters die halbmakroblockweise Speicherung in dem Hilfsspeicher der dem Raster entsprechenden und aus decodierten Bildmakroblöcken abgegebenen Daten gefolgt von der zeilenweisen Entnahme dieser Daten umfaßt.

4. Verfahren nach einem der vorhergehenden Ansprüche, **dadurch gekennzeichnet, daß** die aktuelle Adresse $A_{i,j}$ des Hilfsspeichers, an der aktuelle Daten zur Anzeige ausgelesen werden, ehe sie durch aktuelle Daten eines Halbmakroblocks ersetzt werden, mit $0<i<MN-1$ und $1<j<n$, durch die folgende Regel berechnet wird

$$A_{i+1,j} = (A_{i,j} + x_j) \text{ modulo } (MN-1)$$

$$x_{j+1} = N.x_j \text{ modulo } (MN-1),$$

wobei $x_1=1$, M die Anzahl von Zeilen des Hilfspeichers (MMA), N die Anzahl von Daten pro Zeilen und n die Gesamtzahl von Zeilen jedes Rasters bezeichnen.

5. Verfahren nach einem der vorhergehenden Ansprüche, **dadurch gekennzeichnet, daß** eine Vertikalfilterung (FV) direkt an mindestens zwei Zeilen des im Hilfsspeicher gespeicherten Rasterteils durchgeführt wird.

6. Vorrichtung zur Verarbeitung einer anfallenden Gruppe von Bildern, die jeweils durch komprimierte Daten codiert sind, mit Decodierungsmitteln (MDC) zum makroblockweisen Decodieren jedes aktuellen Bildes der Gruppe, einem mit den Decodierungsmitteln verbundenen Hauptspeicher (MMP) zum Speichern von mindestens gewissen der decodierten Bilder, und Anzeigemitteln (MAF) zum zeilenweisen Anzeigen des aktuellen decodierten Bildes in zwei aufeinanderfolgenden Rastern entsprechend Zeilen unterschiedlicher Paritäten, **dadurch gekennzeichnet, daß** der Hauptspeicher (MMP) ein in Speicherseiten organisierter dynamischer Speicher ist, wobei die Makroblöcke der decodierten und in dem Hauptspeicher gespeicherten Bilder vollständig in den Speicherseiten gespeichert und makroblockweise durch Öffnungen aufeinanderfolgender Seiten zugänglich sind, dadurch, daß die Anzeigeverwaltungsmittel (MAF) folgendes umfassen:

einen Multiplexer (MUX) mit einem ersten, mit dem Ausgang der Decodierungsmittel verbundenen Eingang, einem zweiten, mit dem Ausgang des Hauptspeichers verbundenen Eingang,

einem Block-Zeilen-Wandler (BRC), dessen mit dem Ausgang des Multiplexers (MUX) verbundene Eingang zum halbmakroblockweisen Empfangen von Daten aller Zeilen in der Lage ist, die einen Raster eines aktuellen anzuzeigenden Bildes bilden, und dessen Ausgang mit einer Anzeigevorrichtung (VDCTL) des Rasters verbunden ist, wobei der Block-Zeilen-Wandler einen Hilfsspeicher (MMA) umfaßt, der eine Speicherkapazität mindestens gleich einer Reihe von Halbmakroblöcken entsprechend einer vorbestimmten Anzahl von Zeilen des Rasters des decodierten Bildes während der Anzeige aufweist, und eine Speicherhilfssteuerung (MCTL, ADS) zum Adressieren des Hilfsspeichers zur sequentiellen halbmakroblockweisen Speicherung der am Ausgang des Multiplexers abgegebenen Daten und zur sequentiellen zeilenweisen Entnahme dieser Daten und ihre Abgabe zur Anzeigevorrichtung zur zeilenweise Anzeige des Rasters, und Steuermittel (LMC) zum Ansteuern des Multiplexers zur Verbindung seines Ausgangs mit seinem ersten Eingang oder seinem zweiten Eingang als Funktion der Bildart.

7. Vorrichtung nach Anspruch 6, **dadurch gekennzeichnet, daß** die Speicherhilfssteuerung (ADS) die aktuelle Adresse $A_{i,j}$ des Hilfsspeichers, an dem zur Anzeige bestimmte aktuelle Daten gelesen werden, ehe sie durch aktuelle Daten eines Halbmakroblocks ersetzt werden, mit $0<i<MN-1$ und $1<j<n$, durch folgende Regel berechnet:

$$A_{i+1,j} = (A_{i,j} + x_j) \text{ modulo } (MN-1)$$

$$x_{j+1} = N.x_j \text{ modulo } (MN-1),$$

wobei $x_1=1$, M die Anzahl von Zeilen des Hilfsspeichers, N die Anzahl von Daten pro Zeilen und n die Gesamtzahl von Zeilen jedes Rasters bezeichnen.

8. Vorrichtung nach Anspruch 6 oder 7, **dadurch gekennzeichnet, daß** die Anzeigemittel (MAF) Vertikalfilterungsmittel (FV) umfassen, die direkt mit dem Ausgang des Hilfsspeichers verbunden sind und eine Vertikalfilterung an mindestens zwei Zeilen des im Hilfsspeicher gespeicherten Rasterteils durchführen können.

# FIG.1

EP 0 967 577 B1

# FIG.2

# FIG.3

FIG.4

EP 0 967 577 B1

# FIG.5

## FIG.6

# FIG.7